# EUROPÄISCHE PATENTSCHRIFT

(11) **EP 2 853 887 B1**
(45) Veröffentlichungstag und Bekanntmachung des Hinweises auf die Patenterteilung: **02.08.2017**
(21) Anmeldenummer: 14181320.4
(22) Anmeldetag: 18.08.2014
(51) Int. Cl.: G01N 25/72, B65G 15/12

(54) **EVOH-Barriereschicht-Prüfvorrichtung, Prüfverfahren sowie Prüf- und Herstellanlage, mit Fördermitteln, die an unterschiedlichen Prüfpositionen jeweils unterschiedliche Bereiche der Teile verdecken oder beschatten**
Device and method for testing EVOH barrier layers on molded plastic articles, and production device with testing equipment, with conveying means that cover different parts of the articles at different testing positions
Dispositif et procédé de test pour des couches EVOH sur des articles de matière plastique, et dispositif de production et de test, avec moyens de convoyage qui couvre des différents parts d'un article aux positions de test différentes

(30) Priorität: 27.09.2013 DE 102013110739
(43) Veröffentlichungstag der Anmeldung: 01.04.2015
(73) Patentinhaber: Waldorf Technik GmbH & Co. KG, 78234 Engen (DE)
(72) Erfinder: Czizegg, Wolfgang, 78256 Steisslingen (DE); Fuhrmann, Ralf, 78234 Engen (DE)
(74) Vertreter: Wagner, Kilian

(56) Entgegenhaltungen:
- EP-A1- 1 101 714
- EP-A2- 2 453 225
- WO-A1-2009/071738
- DE-A1-102007 055 210
- JP-A- 2010 032 374
- US-A- 3 378 685
- US-A- 3 968 368
- US-A1- 2004 035 680
- "Steuerung und Teachen leicht gemacht - Österreichische Keba bietet Robotersteuerungen für Entnahmehandling in Spritzgießanwendungen", K-Zeitung 13, 23. Mai 2012 (2012-05-23), XP055155989, Gefunden im Internet: URL:http://www.intravis.de/data/media/down loads/K-ZEITUNG-2012-13-BarrierWatcher-1_1 342420141.pdf [gefunden am 2014-12-01]
- Matt Defosse: "Barrier packaging: Automation specialist develops reliable PP/EVOH co-injection system | PlasticsToday.com", , 28. Januar 2011 (2011-01-28), XP055155994, Gefunden im Internet: URL:http://www.plasticstoday.com/mpw/artic les/barrier-packaging-automation-specialis t-develops-reliable-ppevoh-co-injection-sy stem [gefunden am 2014-12-01]

## Beschreibung

Die Erfindung betrifft eine Prüfvorrichtung gemäß dem Oberbegriff des Anspruchs 1 zur Qualitätsprüfung einer EVOH-Barriereschicht (EVOH = Ethylen-Vinylalkohol-Copolymer) von (mindestens) eine EVOH-Barriereschicht aufweisenden Mehrkomponenten-Kunststoffspritzgussteilen, mit IR-Strahlermitteln zum Beaufschlagen der Kunststoffspritzgussteile mit IR-Strahlung, mit IR-Kameramitteln zur Erfassung von Bilddaten der mit IR-Strahlung beaufschlagten Kunststoffspritzgussteile und mit den IR-Kameramitteln signalleitend verbundenen Analysemitteln zur Auswertung der Bilddaten im Hinblick auf die Qualität, insbesondere Vollflächigkeit und/oder Schichtdicke, der EVOH-Schicht. Ferner betrifft die Erfindung eine Anlage zur (kombinierten) Herstellung und Prüfung von einer EVOH-Barriereschicht aufweisenden Mehrkomponenten-Kunststoffspritzgussteilen gemäß Anspruch 7 sowie ein Verfahren zur Qualitätsprüfung einer EVOH-Barriereschicht gemäß von einer EVOH-Barriereschicht aufweisenden Mehrkomponenten-Kunststoffspritzgussteilen, insbesondere Behältern, gemäß dem Oberbegriff des Anspruchs 8.

Bekannt sind sogenannte Mehrkomponenten-, insbesondere Zweikomponenten-Spritzgussvorrichtungen, mit welchen Kunststoffspritzgussteile, beispielsweise Becher (Verpackungsteile) für die Lebensmittelindustrie oder die Pharmaindustrie hergestellt werden können, die eine integrierte EVOH-Schicht als Barriereschicht gegen Gas aufweisen. Zur Prüfung des Spritzergebnisses, insbesondere im Hinblick darauf, ob die EVOH-Barriereshicht vollflächig vorgesehen ist, oder ob EVOH-Schichtlücken existieren, oder ob die EVOH-Barriereschicht eine ausreichende Schichtdicke aufweist, ist es bekannt, die Kunststoffspritzgussteile unter Zuhilfenahme von Infrarot-Kameras (IR-Kameras) zu analysieren, wobei die Kunststoffspritzgussteile zur Gewinnung der auszuwertenden Bilddaten mit Infrarotstrahlung beaufschlagt werden und die IR-Kamera Bilddaten von der den IR-Strahlen gegenüberliegenden Seite aufnimmt. Ein derartiges IR-Prüfverfahren für mit einer EVOH-Gasbarriereschicht ausgestattete Kunststoffdeckel ist beispielsweise in dem Dokument EP2453225 A2 offenbart. Dieses Verfahren macht sich die Erkenntnis zunutze, dass EVOH IR-Strahlung in einem bekannten Frequenzbereich absorbiert, so dass die Transmission bei vorhandener EVOH-Barriereschicht reduziert wird. Bisher werden die Kunststoffspritzgussteile zur Bilddatengewinnung auf wenigen filigranen Stegen aufliegend gelagert, um den für die Analyse nachteiligen Einfluss durch das Auflage-Medium, d.h. im Stand der Technik der filigranen Stege so weit zu minimieren wie möglich. Bei bekannten Prüfvorrichtungen werden die zu prüfenden Kunststoffspritzgussteile auf große Transportplatten bzw. Trays mit Löchern in parallelen Reihen bzw. Spuren aufgesetzt, in die die vorgenannten filigranen Stege zum Abstützen der Kunststoffspritzgussteile hineinragen. Jeder Reihe bzw. Spur von Kunststoffspritzgussteilen auf einer Platte ist dabei eine IR-Kamera zugeordnet, an der die Platte zur Bilddatengewinnung in Richtung der Reihen- bzw. Spurerstreckung vorbeitransportiert wird. Insgesamt sind zur Überprüfung sämtlicher Kunststoffspritzgussteile auf der Platte eine Vielzahl von nebeneinander angeordneter IR-Kameras notwendig (eine Kamera pro Kunststoffspritzgussteilereihe auf der Platte) an denen die Platte vorbeitransportiert wird. Es ergibt sich also eine Kamerareihenanordnung, wobei sich die Kamerareihe senkrecht zur Transportrichtung der Platte sowie senkrecht zur Reihen- bzw. Spurerstreckung der Kunststoffspritzgussteile erstreckt.

Weiterhin ist aus US3378685 ein Gerät und Verfahren bekannt, wobei ein zu prüfendes Objekt durch eine Wärmequelle angeregt und danach mittels zweier IR-Kameras betrachtet wird, an denen das Objekt durch eine Fördereinrichtung nacheinander vorbei gefördert wird.

Insbesondere für die Massenfertigung von Kunststoffspritzgussteilen, bevorzugt Behälter und Verschlüsse, bestehen Bestrebungen, die Transportgeschwindigkeit und somit auch die Prüfgeschwindigkeit zu erhöhen, da die EVOH-Prüfung bisher einen Flaschenhals darstellt. Auf eine Qualitätsprüfung der EVOH-Barriereschicht kann insbesondere bei kritischen Anwendungen, wie Lebensmitteln oder pharmazeutischen Produkten nicht verzichtet werden, um eine Qualitätsbeeinträchtigung des in dem Kunststoffspritzgussteil aufzunehmenden Produktes nicht zu gefährden. Möglichst sollen bei gleichen Prüfdurchsatzzahlen weniger (und daher schnellere) IR-Kameras einsetzbar sein.

Ausgehend von dem vorgenannten Stand der Technik liegt der Erfindung daher die Aufgabe zugrunde, eine verbesserte Prüfvorrichtung sowie ein verbessertes Prüfverfahren zur Qualitätsprüfung von EVOH-Barriereschichten in Kunststoffspritzgussteilen anzugeben, die eine schnellere Prüfung ermöglichen. Darüber hinaus besteht die Aufgabe darin, eine Anlage zur Herstellung von Mehrkomponenten-Kunststoffspritzgussteilen mit einer EVOH-Barriereschicht anzugeben, in welcher eine derartige verbesserte Prüfvorrichtung integriert ist.

Diese Aufgabe wird hinsichtlich der Prüfvorrichtung mit den Merkmalen des Anspruchs 1, hinsichtlich des Verfahrens mit den Merkmalen des Anspruchs 8 und hinsichtlich der Anlage zur Herstellung und Prüfung der Mehrkomponenten-Kunststoffspritzgussteilen mit den Merkmalen des Anspruchs 7 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale als verfahrensgemäß offenbart werden gelten und beanspruchbar sein. Ebenso sollen verfahrensgemäß offenbarte Merkmale als vorrichtungsgemäß offenbart gelten und beanspruchbar sein.

Der Erfindung liegt der Gedanke zugrunde, Fördermittel vorzusehen, mit denen die Kunststoffspritzgussteile an mindestens zwei unterschiedliche Prüfpositionen transportierbar sind, nämlich eine erste Prüfposition und mindestens eine zweite Prüfposition, wobei an jeder Prüfposition eine IR-Kamera, d.h. eine erste bzw. zweite IR-Kamera (oder bei mehr als zwei Prüfpositionen dann eine dritte, vierte usw. IR-Kamera) vorgesehen ist, um an jeder Prüfposition Bilddaten des Kunststoffspritzgussteils erfassen zu können, wobei an jeder Prüfposition mit IR-Kamera durch das Vorsehen entsprechender IR-Strahlenmittel eine IR-Bestrahlung der Kunststoffspritzgussteile, auf einer von der jeweiligen IR-Kamera abgewandten Seite der Kunststoffspritzgussteile realisiert ist, um anhand der so gewonnenen Bilddaten die Qualität der EVOH-Barrierschicht beurteilen zu können. Auch hier wird sich, wie im Stand der Technik, die Erkenntnis zunutze gemacht, dass eine intakte EVOH-Barriereschicht ein bestimmtes Maß der beaufschlagten IR-Strahlung absorbiert und keine oder nur eine Teilmenge der aufgebrachten IR-Strahlung auf die zugehörige IR-Kamera auftrifft. Hinsichtlich der Auswertekriterien gibt es (an sich bekannte) unterschiedliche Möglichkeiten. Im einfachsten Fall erfolgt ein Vergleich der jeweiligen Bilddaten mit Referenzbilddaten. Auch ist es möglich, die ersten und zweiten und ggf. Mehrbilddaten zu korrelieren. Zudem ist es möglich, die Bilddaten zunächst zu einem vollständigen Bild ohne Beschattung zusammenzusetzen und dann erst auszuwerten, beispielsweise durch Vergleich oder Korrelation. Um eine schnelle Bilddatenerfassung und damit Auswertung zu gewährleisten, sind nun die Fördermittel an den unterschiedlichen, bevorzugt entlang einer Prüfspur angeordneten Prüfpositionen unterschiedlich ausgestaltet, und zwar derart, dass diese, in Abhängigkeit der Anordnung der IR-Kameras, d.h. aus Sicht der jeweiligen IR-Kamera unterschiedliche Bereiche der axialen Projektionsfläche der Kunststoffspritzgussteile verdecken oder beschatten und damit auf dem jeweils aufzunehmenden Bild verdecken oder abschatten. Die IR-Kameras befinden sich bevorzugt in einem Bereich oberhalbder Fördermittel, d.h. die Fördermittel befindensich zwischen den IR-Kameras und den Kunststoffspritzgussteilen, unterhalb welcher sich die IR-Strahlermittel befinden.

In diesem Fall schatten die Fördermittel unterschiedliche Bereiche der axialen Projektionsfläche der zu prüfenden Kunststoffspritzgussteile ab. Alternativ befinden sich die IR-Kameras unterhalb der Fördermittel und die IR-Strahlermittel oberhalb von diesen, was jedoch im Hinblick auf eine erhöhte Verschmutzungsgefahr der IR-Kameras nicht die erste Wahl ist. In diesem Fall verdecken die Fördermittel (aus Kamerasicht) unterschiedliche Bereiche der axialen Projektionsfläche der Kunststoffspritzgussteile. Durch die erfindungsgemäße Anordnung bzw. das erfindungsgemäße Verfahren kann die Bilderfassung deutlich beschleunigt werden. So ist ein Aufsetzen der Kunststoffspritzgussteile auf filigranen Stegen, wie im Stand der Technik nicht mehr notwendig, sondern die Kunststoffspritzgussteile müssen, insbesondere unmittelbar nach der Entnahme aus entsprechenden Kavitäten einer Mehrkomponenten-, insbesondere Zweikomponenten-Spritzgussvorrichtung auf die Fördermittel, insbesondere in einer Reihe hintereinander aufgebracht werden, wobei dann die Fördermittel, auf welche die Kunststoffspritzgussteile im Vergleich zum Stand der Technik sicher stehen, den Transport zu und insbesondere entlang der Prüfpositionen gewährleisten. Durch die unterschiedliche Ausgestaltung der Fördermittel zumindest in zwei Prüfpositionen können jeweils von ein und demselben Kunststoffteil unterschiedliche Bilddaten gewonnen werden, wobei es bevorzugt ist, die Fördermittel so auszugestalten, dass nach Passieren sämtlicher Prüfvorrichtungen Bilddaten jedes Bereichs der axialen Projektionsfläche des entsprechenden Kunststoffspritzgussteils, je nach IR-Kameraanordnung im unbeschatteten oder unverdeckten Zustand aufgenommen sind, um insoweit eine vollständige Analyse bzw. Aufwertung des gesamten Kunststoffspritzgussteils im Hinblick auf die Qualität bzw. Beschaffenheit der EVOH-Barriereschicht vornehmen zu können. Durch eine nach der Erfindung ausgebildete Prüfvorrichtung bzw. Gestaltung eines erfindungsgemäßen Verfahrens kann der Prüfdurchsatz wesentlich erhöht werden. Bevorzugt werden mit der erfindungsgemäßen Vorrichtung bzw. durch das erfindungsgemäße Verfahren mehr als 200 Kunststoffspritzgussteile, insbesondere Becher pro Minute geprüft, weiter bevorzugt mehr als 500, noch weiter bevorzugt mehr als 1000 Kunststoffspritzgussteile.

Die vorgenannten Durchsatzraten beziehen sich jeweils auf eine einspurige Prüfanordnung, welcher die zwei IR-Kameras zugeordnet sind. Durch das Vorsehen mehrerer, beispielsweise paralleler Prüfanordnungen, d.h. das Vorsehen einer mehrspurigen Prüfvorrichtung kann der Durchsatz entsprechend vervielfacht werden. Es können jedoch mit der erfindungsgemäßen Anordnung bereits wesentlich höhere Durchsatzraten erzielt werden, als im Stand der Technik mit einer Vielzahl paralleler Reihen auf einer Transportplatte.

Ein weiterer Vorteil der Erfindung besteht darin, dass im Vergleich zum Stand der Technik die Anzahl von IR-Kameras zur Gewährleistung eines gleichgroßen oder bevorzugt größeren Prüfdurchsatzes reduziert werden kann, da zwar bei der erfindungsgemäßen Ausgestaltung pro Prüfspur mindestens zwei IR-Kameras an mindestens zwei in Förderrichtung beabstandete Prüfpositionen notwendig sind - die Transportgeschwindigkeit ist jedoch im Vergleich zu der Stand der Technik-Platten-Lösung mit jeweils nur einer Kamera pro Prüfspur wesentlich erhöht.

Wie erwähnt ist eine Anordnung bevorzugt, bei der sich die IR-Kameras oberhalb der Fördermittel befinden und die IR-Strahlermittel darunter. In diesem Fall können jeweils Bilddaten der gesamten axialen Projektionsfläche der Kunststoffspritzgussteile gewonnen werden, jedoch sind Abschnitte von den Fördermitteln beschattet (da sich die Fördermittel im Strahlengang der IR-Strahlungsmittel befinden) und andere Abschnitte, an denen das Kunststoffspritzgussteil nicht auf den Fördermitteln aufsteht unbeschattet. Bevorzugt werden die jeweils beschatteten Abschnitte bei der weiteren Auswertung der Bilddaten nicht berücksichtigt, wobei es, wie noch erläutert werden wird, besonders bevorzugt ist, wenn nach Durchlaufen sämtlicher Prüfstationen Bilddaten sämtlicher Bereiche der axialen Projektionsfläche im unbeschatteten Zustand aufgenommen werden können. Selbstverständlich ist auch eine vertauschte Anordnung der IR-Strahler und der Kameras möglich. In diesem Fall werden in den unterschiedlichen Prüfpositionen unterschiedliche Abschnitte der axialen Projektionsfläche von den Fördermitteln verdeckt, da sich dann die Fördermittel zwischen IR-Kamera und Kunststoffspritzgussteil befinden.

Erfindungsgemäß umfassen die Fördermittel mindestens zwei unterschiedlich ausgestaltete Förderbandabschnitte, auf denen die Kunststoffspritzgussteile transportierbar sind. Die Förderbandabschnitte können in Förderrichtung aneinander angrenzen oder durch einen weiteren Förderbandabschnitt voneinander beabstandet sein. Auch ist es denkbar, dass sich die Förderbandabschnitte ein Stück weit in der Förderrichtung überlappen. Die unterschiedlichen Förderbandabschnitte sind nun derart ausgebildet, dass in der ersten und der zweiten und ggf. weiteren Prüfposition bzw. Positionen unterschiedliche Bereiche der axialen Projektionsfläche verdecken, d.h. die Kunststoffspritzgussteile liegen auf den unterschiedlichen Förderbandabschnitten mit unterschiedlichen Flächenabschnitten auf. Besonders bevorzugt ist dabei eine Ausführungsform, bei der der erste Förderbandabschnitt zwei senkrecht zur Förderrichtung betrachtet äußere Fördergurte aufweist, d.h. zwei senkrecht zur Förderrichtung beabstandete Förderbandabschnitte, so dass mittels der ersten IR-Kamera ein Abbild der unbeschatteten oder unverdeckten axialen Projektionsfläche der Kunststoffspritzgussteile in einem Bereich zwischen diesen Gurten aufgenommen werden kann. Weiter bevorzugt ist es, wenn nun der zweite Förderbandabschnitt so ausgebildet ist, dass er einen mittleren Bereich der Kunststoffspritzgussteile abdeckt oder beschattet, so dass mittels der zweiten IR-Kamera Bilddaten mindestens eines äußeren (zuvor verdeckten bzw. beschatteten) Bereichs, insbesondere zweier zuvor verdeckter und senkrecht zur Fördereinrichtung beabstandeter Auflagebereiche der Kunststoffspritzgussteile aufgenommen werden können. Wie erwähnt, ist es denkbar, dass der erste und der zweite Förderbandabschnitt aneinander angrenzen oder sich ein Stück weit in Förderrichtung überlappen. Bevorzugt ist der zweite Förderbandabschnitt so ausgestaltet, dass er senkrecht zur Förderrichtung betrachtet nicht in einen Bereich der Fördergurte des ersten Förderbandabschnittes hineinragt. Ganz besonders bevorzugt ist der zweite bzw. mittlere Fördergurt sogar senkrecht zur Förderrichtung von den äußeren Gurten beabstandet.

Selbstverständlich ist auch eine umgekehrte Ausgestaltung der Förderbandabschnitte realisierbar, d.h. das Vorsehen von zwei äußeren Fördergurten als bzw. im zweiten Förderbandabschnitt und das Vorsehen mindestens eines mittleren Gurtes im Bereich bzw. als ersten Förderbandabschnitt.

Auf die vorgenannten Ausgestaltungsformen der mindestens zwei unterschiedlichen Förderbandabschnitte ist die Erfindung nicht beschränkt. Denkbar ist auch eine hiervor abweichende Ausgestaltung. So können im ersten Förderbandabschnitt auch mehr oder weniger Fördergurte vorgesehen werden.

Unabhängig von der konkreten Ausgestaltung der mindestens zwei Förderbandabschnitte ist es bevorzugt, wenn die Förderbandabschnitte so aufeinander abgestimmt bzw. ausgebildet sind, dass nach Passieren sämtlicher Prüfpositionen Bilddaten sämtlicher Bereiche der axialen Projektionsfläche der Kunststoffbehälter im unbeschatteten oder verdeckten im Zustand erhalten werden. Dies kann erreicht werden, indem jeder Bereich der axialen Projektionsfläche der Kunststoffspritzgussteile an zumindest einer der Prüfpositionen zumindest einmal nicht von einem Fördergurt verdeckt ist.

Vorteilhaft ist eine Ausführungsform der Prüfvorrichtung, bei der diese Aussortiermittel umfasst, beispielsweise Ausblasmittel oder mechanische Aussortiermittel, die in Abhängigkeit des Analyse- bzw. Auswerteergebnisses als von den Auswertemitteln schadhaft eingestufte Kunststoffspritzgussteile aussortieren, insbesondere indem diese von den Fördermitteln der Prüfvorrichtung entfernt werden.

Die Erfindung führt auch auf eine Anlage zur Herstellung und Prüfung einer eine EVOH-Barriereschicht aufweisenden Mehrkomponenten-, insbesondere Zweikomponenten-Kunststoffspritzgussteilen, wobei die Anlage neben einer entsprechenden Mehrkomponenten, insbesondere Zweikomponenten-Spritzgussvorrichtung eine nach dem Konzept der Erfindung ausgebildete Prüfvorrichtung umfasst sowie Mittel zum Entnehmen der Kunststoffspritzgussteile aus Kavitäten der Spritzgussvorrichtung und zum Überführen der Kunststoffspritzgussteile zu den, insbesondere auf die Fördermittel der Prüfvorrichtung.

Darüber hinaus führt die Erfindung auf ein Verfahren zur Qualitätsprüfung einer EVOH-Barrierschicht von einer EVOH-Barriereschicht aufweisenden Mehrkomponenten, insbesondere Zweikomponenten-Kunststoffspritzgussteilen, wobei das Verfahren bereits im Detail im Zusammenhang mit einer erfindungsgemäßen Prüfvorrichtung erläutert wurde, jedoch auch grundsätzlich durch anders gestaltete Prüfvorrichtungen ausführbar ist.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: in einer Draufsicht eine stark schematisierte Darstellung einer Anlage zur Herstellung und Prüfung von einer EVOH-Barriereschicht aufweisenden Mehrkomponenten-Kunststoffspritzgussteilen und
- Fig. 2:: in einer Draufsicht ein Detail einer Prüfvorrichtung.

In den Figuren sind gleiche Elemente und Elemente mit der gleichen Funktion mit den gleichen Bezugszeichen gekennzeichnet.

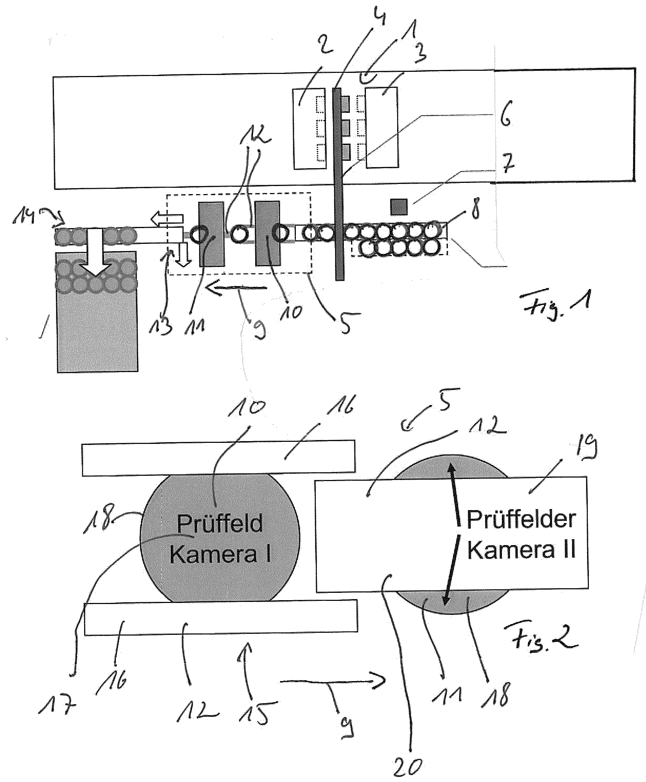

In Fig. 1 ist in der Zeichnung oben eine Mehrkomponenten-Spritzgussvorrichtung 1, hier eine Zweikomponenten-Spritzgussvorrichtung gezeigt, mit welcher gleichzeitig ein Trägerkunststoff und EVOH zu einem Kunststoffspritzgussteil, insbesondere einem Becher für die Lebensmittel- und/oder Pharmaindustrie gespritzt werden kann. Die Spritzgussvorrichtung 1 umfasst zwei relativ zueinander verstellbare Teilformen 2, 3 aus deren Kavitäten nach einem Spritzgussvorgang mit Hilfe geeigneter, an sich bekannter Mittel 4, die eine EVOH-Barriereschicht aufweisenden Kunststoffspritzgussteile entnommen und zu einer Prüfvorrichtung 5 überführt werden können. In dem gezeigten Ausführungsbeispiel umfassen die Mittel 4 einen Entnahmeroboter 6, mit dem die Kunststoffspritzgussteile aus den Kavitäten entnommen werden sowie eine Schwenkeinheit 7, mit der die Kunststoffspritzgussteile in eine aus der Kavitätenformation in eine Reihe gerastert und auf ein Förderband 8 überführt werden können.

Mittels des Förderbandes 8 werden die Kunststoffspritzgussteile zur Prüfvorrichtung 5 transportiert, die sich auszeichnet durch zwei in einer Förderrichtung 9 beabstandete Prüfpositionen, nämlich eine erste Prüfposition 10 und eine zweite Prüfposition 11, an denen jeweils oberhalb von Fördermitteln 12 eine erste bzw. zweite IR-Kamera angeordnet sind. Unterhalb der Fördermittel 12 sind IR-Strahlermittel angeordnet, um die Kunststoffspritzgussteile zum Zwecke der Durchleuchtung, bzw. Durchstrahlung mit IR-Strahlung zu beaufschlagen.

Die IR-Kameras sind zur Übermittlung der gewonnenen Bilddaten mit nicht gezeigten Analyse- bzw. Auswertemitteln verbunden, die wiederum Aussortiermittel 13 ansteuernd ausgebildet sind, um als schlecht identifizierte Kunststoffspritzgussteile von den Fördermitteln 12 entfernen zu können. Die Aussortiermittel 13 sind den Prüfpositionen in der Förderrichtung 9 nachgeordnet. In Förderrichtung 9 nach den Aussortiermitteln 13 befinden sich Stapel- und/oder Verpackungsmittel 14 zum weiteren Handling der geprüften und für in Ordnung befundenen Kunststoffspritzgussteile.

In Fig. 2 ist eine Unteransicht auf ein Detail einer Prüfvorrichtung 5 gezeigt. Zu erkennen sind die Fördermittel 12, die im Bereich der ersten Prüfposition 10 einen ersten Förderbandabschnitt 15 mit zwei ersten (hier äußeren) Fördergurten 16 umfassen, die senkrecht zur Förderrichtung 9 betrachtet voneinander beabstandet sind, so dass das Kunststoffspritzgussteil mit zwei äußeren Randseitenbereichen aufliegt und mit Hilfe der ersten IR-Kamera Bilddaten der nicht beschattetenaxialen Projektionsfläche 18 des Kunststoffspritzgussteils erfassen können. Nach Passieren der ersten Prüfposition 17 gelangt das jeweils fotografierte Kunststoffspritzgussteil an die zweite Prüfposition 11, welcher ein zweiter Förderbandabschnitt 19 zugeordnet ist, umfassend in dem gezeigten Ausführungsbeispiel einen senkrecht zur Förderrichtung 9 betrachtet mittig angeordneten zweiten (mittlerer bzw. innerer) Fördergurt 20, welcher die ersten Fördergurte 16 in der Förderrichtung (fakultativ) überlappt, nicht jedoch senkrecht zur Förderrichtung. Hier sollte der zweite Fördergurt 20 eine maximale Breite haben, die dem Abstand der ersten Fördergurte 16 entspricht. In dem gezeigten Ausführungsbeispiel ist in vorteilhafter Weise vorgesehen, dass sogar ein Spalt jeweils zwischen einem ersten Fördergurt und dem zweiten Fördergurt vorgesehen ist, so dass in jedem Fall sichergestellt ist, dass an der zweiten Prüfposition 11 mit Hilfe der zweiten IR-Kamera 21 Bilddaten desjenigen Bereichs der axialen Projektionsfläche 18 aufgenommen werden können, die an der ersten Prüfposition 10 von den Fördermitteln 12, genauer dem ersten Förderbandabschnitt 15 beschattet waren.

Für den Fall, dass die IR-Kameras und die IR-Strahlermittel vertauscht angeordnet sind, werden die in der vorherigen Beschreibung beschatteten Bereiche der axialen Projektionsfläche von den Fördermitteln verdeckt.

Auf die gezeigte Ausführungsform bzw. konkrete Ausgestaltung der Fördermittel 12 ist die Erfindung nicht beschränkt. Die Position der ersten und zweiten Gurte 16, 20 kann in Förderrichtung 9 auch vertauscht sein. Ebenso ist es denkbar, dass anstelle eines zweiten Fördergurtes 19 mehr als ein Fördergurt vorgesehen sind. Es ist auch denkbar mehrere Prüfpositionen vorzusehen. Besonders bevorzugt ist es jedenfalls, wenn die Fördermittel 12 insgesamt so ausgestaltet sind, dass spätestens nach Passieren sämtlicher Prüfpositionen Bilddaten sämtlicher Bereiche der axialen Projektionsfläche der Kunststoffspritzgussteile gewonnen werden und den Analysemitteln zugeleitet werden konnten.

### Bezugszeichen

- 1: Spritzgussvorrichtung
- 2: Teilform
- 3: Teilform
- 4: Mittel
- 5: Prüfvorrichtung
- 6: Entnahmeroboter
- 7: Schwenkeinheit
- 8: Förderband
- 9: Förderrichtung
- 10: erste Prüfposition
- 11: zweite Prüfposition
- 12: Fördermittel
- 13: Aussortiermittel
- 14: Stapel und/oder Verpackungsmittel
- 15: erster Förderbandabschnitt
- 16: erste äußere Fördergurte
- 17: erste IR-Kamera
- 18: axiale Projektionsfläche
- 19: zweiter Förderbandabschnitt
- 20: zweiter innerer Fördergurt
- 21: zweite IR-Kamera

## Patentansprüche

1. Prüfvorrichtung (5) zur Qualitätsprüfung einer EVOH-Barriereschicht von eine EVOH-Barriereschicht aufweisenden Mehrkomponenten-Kunststoffspritzgussteilen, insbesondere von Behältern oder Verschlüssen, mit IR-Strahlermitteln zum Beaufschlagen der Kunststoffspritzgussteile mit IR-Strahlung, mit IR-Kameramitteln zur Erfassung von Bilddaten der mit IR-Strahlung beaufschlagten Kunststoffspritzgussteile und mit den Kameramitteln signalleitend verbundenen Analysemitteln zur Auswertung der Bilddaten im Hinblick auf die Qualität der EVOH-Barriereschicht, sowie mit Fördermitteln (12) zum Transportieren der Kunststoffspritzgussteile zu den IR-Kameramitteln,
**dadurch gekennzeichnet,**
**dass** die Fördermittel (12) ausgebildet sind, die Kunststoffspritzgussteile zu einer ersten Prüfposition (10), der eine auf einer von den IR-Strahlermitteln abgewandten Seite der Kunststoffspritzgussteile angeordnete erste IR-Kamera (17) der Kameramittel zur Erfassung von ersten Bilddaten zugeordnet ist und danach zu mindestens einer zweiten Prüfposition (11), der eine auf einer von den IR-Strahlermitteln abgewandten Seite der Kunststoffspritzgussteile angeordnete zweite IR-Kamera der Kameramittel zur Erfassung von zweiten Bilddaten zugeordnet ist, zu transportieren, und dass die Fördermittel (12) mindestens zwei unterschiedliche Förderbandabschnitte aufweisen, die in der ersten und zweiten Prüfposition (10, 11) voneinander unterschiedliche Bereiche einer axialen Projektionsfläche (18) der mit unterschiedlichen Flächenabschnitten auf den unterschiedlichen Förderbandabschnitten aufliegenden Kunststoffspritzgussteile beschatten oder verdecken, wobei eine der Prüfpositionen zwei senkrecht zur Förderrichtung (9) voneinander beabstandete Förderbandabschnitte (16) umfasst.

2. Prüfvorrichtung nach Anspruch 1,
**dadurch gekennzeichnet,**
**dass** die Fördermittel (12) derart ausgebildet sind, dass durch Passieren sämtlicher Prüfpositionen (10, 11) Bilddaten sämtliche Bereiche der axialen Projektionsfläche (18) der Kunststoffspritzgussteile im unbeschatteten bzw. unverdeckten Zustand erfassbar sind.

3. Prüfvorrichtung nach einem der vorhergehenden Ansprüche,
**dadurch gekennzeichnet,**
**dass** der erste und der zweite Förderbandabschnitt (15, 19) jeweils mindestens einen Fördergurt umfassen, wobei sich die Fördergurte der Förderbandabschnitte (15, 19) senkrecht zur Förderrichtung (9) nicht überlappend angeordnet sind und bevorzugt senkrecht zur Förderrichtung (9) beabstandet sind.

4. Prüfvorrichtung nach einem der vorhergehenden Ansprüche
**dadurch gekennzeichnet,**
**dass** der erste Förderbandabschnitt (15) zwei senkrecht zur Förderrichtung (9) betrachtet äußere Fördergurte (16) aufweist, um mit der ersten IR-Kamera (17) die ersten Bilddaten von einem unbeschatteten oder nicht verdeckten Bereich der axialen Projektionsfläche (18) der Kunststoffspritzgussteile zwischen den äußeren Fördergurten (16) erfassen zu können und der zweite Förderbandabschnitt (19) mindestens einen, bevorzugt ausschließlich einen, senkrecht zur Förderrichtung (9) betrachtet mittigen, insbesondere senkrecht zur Förderrichtung (9) betrachtet zwischen den äußeren Fördergurten (16) angeordneten Fördergurt (20) aufweist, um mit der zweiten IR-Kamera (21) die zweiten Bilddaten von mindestens einem senkrecht zur Förderrichtung (9) betrachtet äußeren, nicht beschatteten oder nicht verdeckten Bereich der axialen Projektionsfläche (18) erfassen zu können.

5. Prüfvorrichtung nach einem der vorhergehenden Ansprüche
**dadurch gekennzeichnet,**
**dass** der zweite Förderbandabschnitt (19) zwei senkrecht zur Förderrichtung (9) betrachtet äußeren Fördergurte (16) aufweist, um mit der zweiten IR-Kamera (21) die zweiten Bilddaten von einem nicht beschatteten oder nicht verdeckten Bereich der axialen Projektionsfläche (18) der Kunststoffspritzgussteile zwischen den äußeren Fördergurten (16) erfassen zu können und der erste Förderbandabschnitt (15) mindestens einen, bevorzugt ausschließlich einen, senkrecht zur Förderrichtung (9) betrachtet mittigen, insbesondere senkrecht zur Förderrichtung (9) betrachtet zwischen den äußeren Fördergurten (16) angeordneten Fördergurt (20) aufweist, um mit der ersten IR-Kamera (17) die ersten Bilddaten von mindestens einem senkrecht zur Förderrichtung (9) betrachtet äußeren, nicht beschatteten oder nicht verdeckten Bereich der axialen Projektionsfläche (18) erfassen zu können.

6. Prüfvorrichtung nach einem der vorhergehenden Ansprüche
**dadurch gekennzeichnet,**
**dass** den Kameramitteln Aussortiermittel (13) zum Aussortieren von von den Auswertemitteln als fehlerhaft eingestuften Kunststoffspritzgussteilen nachgeordnet sind.

7. Anlage zur Herstellung und Prüfung von eine EVOH-Barriereschicht aufweisenden Mehrkomponenten-Kunststoffspritzgussteilen, umfassend eine zum Mehrkomponentenspritzgießen zur Herstellung einer, insbesondere umspritzten EVOH-Barriereschicht ausgebildeten Spritzgussvorrichtung (1), eine der Spritzgussvorrichtung (1) nachgeordnete Prüfvorrichtung (5) nach einem der Ansprüche 1 bis 6, sowie Mittel (4) zum Entnehmen der Kunststoffspritzgussteile aus Kavitäten der Spritzgussvorrichtung (1) und Überführen der Kunststoffspritzgussteile zu den Fördermitteln (12) der Prüfvorrichtung (5).

8. Verfahren zur Qualitätsprüfung einer EVOH-Barriereschicht von eine EVOH-Barriereschicht aufweisenden Mehrkomponenten-Kunststoffspritzgussteilen, insbesondere unter Verwendung einer Prüfvorrichtung (5) nach einem der Ansprüche 1 bis 6 wobei die Qualitätsprüfung durchgeführt wird, indem Bilddaten ausgewertet werden, die mit IR-Kameramitteln von Kunststoffspritzgussteilen erfasst werden, die zur Bilddatenerfassung mit IR-Strahlung von IR-Strahlermitteln beaufschlagt werden,
**dadurch gekennzeichnet,**
**dass** die Kunststoffspritzgussteile zu einer ersten Prüfposition (10) mit Hilfe von, mindestens zwei unterschiedliche Förderbandabschnitten aufweisenden Fördermitteln (12) gefördert werden, an der erste Bilddaten mittels einer auf einer von den IR-Strahlermitteln abgewandten Seite der Kunststoffspritzgussteile angeordneten ersten IR-Kamera (13) der IR-Kameramittel erfasst werden und danach zu einer zweiten Prüfposition (11) an der zweite Bilddaten mittels einer auf einer von den IR-Strahlermitteln abgewandten Seite der Kunststoffspritzgussteile angeordneten zweiten IR-Kamera (21) der IR-Kameramittel erfasst werden gefördert werden, und dass die Kunststoffspritzgussteile mit unterschiedlichen Flächenabschnitten auf den unterschiedlichen Förderbandabschnitten aufliegen, und dass in der ersten und der zweiten Prüfposition (10, 11) voneinander unterschiedliche Bereiche einer axialen Projektionsfläche (18) der Kunststoffspritzgussteile verdeckt oder beschattet werden, wobei eine der Prüfpositionen zwei senkrecht zur Förderrichtung (9) voneinander beabstandete Förderabschnitte (16) umfasst.

9. Verfahren nach Anspruch 8,
**dadurch gekennzeichnet,**
**dass** an der ersten Prüfposition (10) zwei, senkrecht zur Förderrichtung (9) betrachtet äußere Bereiche der axialen Projektionsfläche (18) und an der zweiten Prüfposition (11) ein, senkrecht zur Förderrichtung (9) betrachtet mittlerer Bereich der axialen Projektionsfläche (18) verdeckt bzw. beschattet werden oder umgekehrt.

10. Verfahren nach einem der Ansprüche 8 oder 9
**dadurch gekennzeichnet,**
**dass** mehr als 200, vorzugsweise mehr als 500, bevorzugt 1000 oder mehr Kunststoffspritzgussteile pro Minute in einer Reihe an der ersten und/oder der zweiten Prüfposition (10, 11) entlang gefördert werden.

## Claims

1. Testing device (5) for testing quality of an EVOH barrier layer of a multicomponent plastic injection-molded part comprising an EVOH barrier layer, in particular of containers or seals, with IR radiator elements for applying the plastic injection-molded parts with IR radiation, with IR camera elements for capturing image data of the plastic injection-molded parts applied with IR radiation and analysis elements connected to the camera elements in a signal conductive manner for evaluation of the image data regarding quality of the EVOH barrier layer, as well as conveying elements (12) for transporting the plastic injection-molded parts to the IR camera elements,
**characterized in that**
the conveying elements (12) are configured to transport the plastic injection-molded parts to a first testing position (10), to which a first IR camera (17) of the camera elements for capturing first image data, which is arranged on a side of the plastic injection-molded parts facing away from the IR radiator elements, is assigned, and thereafter to a second testing position (11), to which a second IR camera of the camera elements for capturing second image data arranged on a side of the plastic injection-molded parts facing away from the IR radiator elements is assigned, and **in that** the conveying elements (12) comprise at least two different conveyor sections, which shade or cover in the first and second testing position (10, 11) regions, differing from one another, of an axial projection surface (18) of the plastic injection-molded parts resting on the different conveyor sections with different surface sections, wherein one of the testing positions comprises two conveyor sections (16) spaced from one another vertically to the conveying direction (9).

2. Testing device according to claim 1,
**characterized in that**
the conveying elements (12) are formed such that by passing all testing positions (10, 11) image data of all regions of the axial projection surface (18) of the plastic injection-molded parts can be captured in the unshaded or uncovered state.

3. Testing device according to one of the preceding claims,
**characterized in that**
the first and the second conveyor section (15, 19) each comprise at least one conveyor belt, wherein the conveyor belts of the conveyor sections (15, 19) are arranged not to overlap vertically to the conveying direction (9) and preferably are spaced apart vertically to the conveying direction (9).

4. Testing device according to one of the preceding claims,
**characterized in that**
the first conveyor section (15) comprises two outer conveyor belts (16) viewed vertically to the conveying direction (9) to be able to capture the first image data of an unshaded or uncovered region of the axial projection surface (18) of the plastic injection-molded parts between the outer conveyor belts (16) with the first IR camera (17) and the second band conveyor section (19) comprises at least one, in particular exclusively one central conveyor belt (20) when viewed vertically to the conveying direction (9), in particular arranged between the outer conveyor belts (16) when viewed vertically to the conveying direction (9) to be able to capture the second image data of at least one outer, unshaded or uncovered region when viewed vertically to the conveying direction (9) of the axial projection surface (18) with the second IR camera (21).

5. Testing device according to one of the preceding claims,
**characterized in that**
the second conveyor section (19) comprises two outer conveyor belts (16) when viewed vertically to the conveying direction (9) to be able to capture the second image data of an unshaded or uncovered region of the axial projection surface (18) of the plastic injection-molded parts between the outer conveyor belts (16) with the second IR camera (21) and the first band conveyor section (15) comprises at least one, in particular exclusively one central conveyor belt (20) when viewed vertically to the conveying direction (9), in particular arranged between the outer conveyor belts (16) when viewed vertically to the conveying direction (9) to be able to capture the first image data of at least one outer, unshaded or uncovered region when viewed vertically to the conveying direction (9) of the axial projection surface (18) with the first IR camera (17).

6. Testing device according to one of the preceding claims,
**characterized in that**
sorting elements (13) for sorting-out plastic injection-molded parts classified as being defective by the evaluation elements are disposed downstream the camera elements.

7. Facility for producing and testing of multicomponent plastic injection-molded parts comprising an EVOH barrier layer, comprising an injection molding machine (1) for multicomponent injection-molded parts for producing a, in particular molded EVOH barrier layer, a testing device (5) downstream injection molding machine (1) according to one of claims 1 to 6, as well as elements (4) for removing the plastic injection-injection molded parts from cavities of the injection molding machine (1) and transferring the plastic injection-molded parts to the conveying elements (12) of the testing device (5).

8. Method for quality testing of an EVOH barrier layer of multicomponent plastic injection-molded parts comprising an EVOH barrier layer, in particular using a testing device (5) according to one of claims 1 to 6, wherein the quality testing is performed by evaluating image data which are captured of plastic injection-molded parts by camera elements which are applied with IR radiation by IR radiator elements for capturing image data,
**characterized in that**
the plastic injection-molded parts are conveyed to a first testing position (10) using conveying elements (12) comprising at least two different conveyor sections, where first image data are captured with a first IR camera (17) of the camera elements, arranged on a side of the plastic injection-molded parts facing away from the IR radiator elements, and thereafter are conveyed to a second testing position (11), where second image data are captured with a second IR camera (21) of the camera elements, arranged on a side of the plastic injection-molded parts facing away from the IR radiator elements, and **in that** the plastic injection-molded parts rest on the different conveyor sections with different surface sections, and **in that** in the first and second testing position (10, 11), regions differing from one another of the axial projection surface (18) of the plastic injection-molded parts are covered or shaded, wherein one of the testing positions comprises two conveyor belt sections (16) spaced apart vertically to the conveying direction (9).

9. Method according to claim 8,
**characterized in that**
at the first testing position (10), two outer regions, when viewed vertically to the conveying direction (9), of the axial projection surface (18), and at the second testing position (11) one central region, when viewed vertically to the conveying direction (9), of the axial projection surface (18), are covered or shaded or vice versa.

10. Method according to one of claims 8 or 9,
**characterized in that**
more than 200, preferably more than 500, preferably 1000 or more plastic injection-molded parts are conveyed per minute in a row along the first and/or second testing position (10, 11).

## Revendications

1. Dispositif de test (5) pour la vérification de qualité d'une couche barrière d'EVOH d'articles moulés par injection en matière plastique à composants multiples comportant une couche barrière d'EVOH, en particulier de récipients ou d'obturateurs, à l'aide de moyens émetteurs d'IR destinés à exposer les articles moulés par injection en matière plastique à un rayonnement IR, à l'aide de moyens à caméra IR destinés à détecter des données d'image des articles moulés par injection en matière plastique exposés au rayonnement IR et comportant des moyens d'analyse reliés d'une manière conductrice de signaux aux moyens à caméra pour évaluer les données d'image en ce qui concerne la qualité de la couche barrière d'EVOH, et des moyens de transport (12) destinés à transporter les pièces moulées par injection en matière plastique vers les moyens à caméra IR,
**caractérisé en ce que** les moyens de transport (12) sont conçus pour transporter les pièces moulées par injection en matière plastique à une première position de test (10) à laquelle est associée une première caméra IR (17) des moyens à caméra, disposée sur un côté de la pièce moulée par injection en matière plastique qui est tourné en sens opposé aux moyens émetteurs d'IR pour acquérir des premières données d'image puis à au moins une seconde position de test (11) à laquelle est associée une seconde caméra IR des moyens à caméra, disposée sur un côté des articles moulés par injection en matière plastique qui est tourné en sens opposé aux moyens émetteurs d'IR pour acquérir des secondes données d'image, et **en ce que** les moyens de transport (12) comportent au moins deux sections de bandes de transport différentes qui couvrent ou masquent, aux première et seconde positions de test (10, 11), des zones différentes l'une de l'autre d'une surface de projection axiale (18) des articles moulés par injection en matière plastique reposant par des sections de surface différentes sur les différentes sections de bandes de transport, dans lequel l'une des positions de test comprend deux sections de bandes de transport (16) espacées l'une de l'autre perpendiculairement à la direction de transport (9).

2. Dispositif de test selon la revendication 1, **caractérisé en ce que** les moyens de transport (12) sont réalisés de manière à ce que des données d'image de la totalité de zones de la surface de projection axiale (18) des articles moulés par injection en matière plastique puissent être acquises par passage de la totalité des positions de test (10, 11) dans l'état non couvert ou non masqué.

3. Dispositif de test selon l'une quelconque des revendication précédentes,
**caractérisé en ce que** les première et seconde sections de bandes de transport (15, 19) comprennent respectivement au moins une bande transporteuse, dans lequel les bandes transporteuses des sections de bandes de transport (15, 19) sont disposées de manière non superposée perpendiculairement à la direction de transport (9) et sont de préférence espacées perpendiculairement à la direction de transport (9).

4. Dispositif de test selon l'une quelconque des revendications précédentes,
**caractérisé en ce que** la première section de bande de transport (15) comporte deux bandes transporteuses extérieures (16) lorsqu'on les observe perpendiculairement à la direction de transport (9), afin de pouvoir acquérir au moyen de la première caméra IR (17) les premières données d'images d'une zone non couverte ou non masquée de la surface de projection axiale (18) des articles moulés par injection en matière plastique entre les bandes transporteuses extérieures (16) et la seconde section de bande transporteuse (19) comporte au moins une, de préférence exclusivement une bande transporteuses (20) disposée de manière centrale lorsqu'on l'observe perpendiculairement à la direction de transport (9),
notamment lorsqu'on l'observe perpendiculairement à à direction de transport (9) entre les bandes transporteuses extérieures (16), afin de pouvoir détecter à l'aide de la seconde caméra IR (21) les secondes données d'images d'au moins une zone de à surface de projection axiale (18) extérieure, non couverte ou non masquée lorsqu'on l'observe perpendiculairement à la direction de transport (9).

5. Dispositif de test selon l'une quelconque des revendications précédentes,
**caractérisé en ce que** la seconde section de bande de transport (19) comporte deux bandes transporteuses extérieures (16) lorsqu'on l'observe perpendiculairement à la direction de transport (9), afin de pouvoir acquérir, à l'aide de la seconde caméra IR (21), les secondes données d'images d'une zone non couverte ou non masquée de la surface de projection axiale (18) des articles moulés par injection en matière plastique entre les bandes transporteuses extérieures (16) et la première section de bande de transport (15) comporte au moins une et de préférence exclusivement une bande transporteuse (20) centrale lorsqu'on l'observe perpendiculairement à la direction de transport (9), en particulier disposée entre les bandes transporteuses extérieures (16) lorsqu'on l'observe perpendiculairement à la direction de transport (9), afin de pouvoir acquérir à l'aide de la première caméra IR (17) les premières données d'images d'au moins une zone extérieure, non couverte ou non masquée lorsqu'on l'observe perpendiculairement à à direction de transport (9), de la surface de projection axiale (18).

6. Dispositif de test selon l'une quelconque des revendications précédentes,
**caractérisé en ce qu'**il est prévu en aval des moyens à caméra des moyens de tri (13) destinés à trier des articles moulés par injection en matière plastique classés par les moyens d'évaluation comme étant exempts de défauts.

7. Installation de fabrication et de test d'articles moulés par injection en matière plastique à plusieurs composants comportant une couche barrière d'EVOH, comprenant un dispositif de moulage par injection (1) réalisé pour le moulage par injection de composants multiples afin de fabriquer une couche barrière d'EVOH, en particulier enrobée, un dispositif de test (5) selon l'une quelconque des revendications 1 à 6, disposé en aval du dispositif de moulage par injection (1), ainsi que des moyens (4) destinés à retirer les articles moulés par injection en matière plastique de cavités du dispositif de moulage par injection (1) et à transférer les pièces moulées par injection en matière plastique vers les moyens de transport (12) du dispositif de test (5).

8. Procédé de test de qualité d'une couche barrière d'EVOH d'articles moulés par injection en matière plastique à composants multiples comportant une couche barrière d'EVOH, en particulier par utilisation d'un dispositif de test (5) selon l'une quelconque des revendications 1 à 6, dans lequel le test de qualité est effectué en évaluant des données d'images qui ont été acquises à partir d'articles moulés par injection en matière plastique à l'aide de moyens à caméra IR, lesquels articles sont exposés à un rayonnement IR par des moyens émetteurs d'IR pour acquérir les données d'images,
**caractérisé en ce que** les articles moulés par injection en matière plastique sont transportés à une première position de test (10) à l'aide de moyens de transport (12) compostant au moins deux sections de bande de transport différentes, à laquelle les premières données d'images sont acquises au moyen d'une première caméra IR (13) des moyens à caméra IR, qui est disposée sur un côté des articles moulés par injection en matière plastique qui est tourné en sens opposé aux moyens émetteurs d'IR puis à une seconde position de test (11) à laquelle des secondes données d'images sont acquises au moyen d'une seconde caméra IR (21) des moyens à caméra IR, qui est disposée sur un côté des articles moulés par injection en matière plastique qui est tourné en sens opposé aux moyens émetteurs d'IR, et **en ce que** les articles moulés par injection en matière plastique reposent par des sections de surfaces différentes sur les sections de bande de transport différentes et **en ce qu'**aux première et seconde positions de test (10, 11), des zones différentes les unes des autres d'une surface de projection axiale (18) des articles moulés par injection en matière plastique sont couvertes ou masquées, dans lequel l'une des positions de test comprend deux sections de bande de transport (16) espacées l'une de l'autre perpendiculairement à la direction de transport (9).

9. Procédé selon la revendication 8,
**caractérisé en ce que**, à la première position de test (10), deux zones extérieures de la surface de projection axiale (18), lorsqu'on les observe perpendiculairement à la direction de transport (9), et à la seconde position de test (11), une zone centrale de la surface de projection axiale (18), lorsqu'on l'observe perpendiculairement à la direction de transport (9), sont masquées ou couvertes ou inversement.

10. Procédé selon l'une quelconque des revendications 8 ou 9,
**caractérisé en ce que** plus de 200, de préférence plus de 500, et mieux encore, au moins 1000 articles moulés par injection en matière plastique par minute sont transportés séquentiellement par passage à la première et/ou à à seconde position de test (10, 11).
